# EUROPÄISCHE PATENTSCHRIFT

(11) **EP 2 820 283 B1**
(45) Veröffentlichungstag und Bekanntmachung des Hinweises auf die Patenterteilung: **10.04.2019**
(21) Anmeldenummer: 13705778.2
(22) Anmeldetag: 22.02.2013
(51) Int. Cl.: F02B 31/08, F02M 35/10

(54) **BRENNKRAFTMASCHINE MIT FRISCHGASVERTEILER**
ENGINE WITH FRESH AIR DISTRIBUTOR
MOTEUR AVEC DISTRIBUTEUR D'AIR

(30) Priorität: 01.03.2012 DE 102012203232
(43) Veröffentlichungstag der Anmeldung: 07.01.2015
(73) Patentinhaber: Mahle International GmbH, 70376 Stuttgart (DE)
(72) Erfinder: BUCK, Simon, 72555 Metzingen (DE); GÜTH, Wolfgang, 70597 Stuttgart (DE); MAYER, Burkhardt, 71334 Waiblingen (DE)
(74) Vertreter: BRP Renaud & Partner mbB Rechtsanwälte Patentanwälte Steuerberater
(86) Internationale Anmeldenummer: PCT/EP2013/053581
(87) Internationale Veröffentlichungsnummer: WO 2013/127705

(56) Entgegenhaltungen:
- EP-A1- 1 367 236
- EP-A1- 2 148 077
- EP-A2- 0 074 202
- EP-A2- 1 772 615
- WO-A1-02/48534
- DE-A1- 10 245 478
- US-A1- 2003 196 640
- US-A1- 2008 230 034
- US-A1- 2009 194 060

## Beschreibung

Die vorliegende Erfindung betrifft eine Brennkraftmaschine, insbesondere für ein Kraftfahrzeug, mit den Merkmalen des Oberbegriffs des Anspruchs 1. Die Erfindung betrifft außerdem einen Frischgasverteiler für eine derartige Brennkraftmaschine.

Aus der EP 0 726 388 B1 ist ein Frischgasverteiler für eine Brennkraftmaschine bekannt, wobei der Frischgasverteiler in üblicher Weise zum Zuführen von Frischgas zu Einlasskanälen dient, die in einem Zylinderkopf der Brennkraftmaschine vorgesehen sind und zu Brennräumen der Brennkraftmaschine führen. Der Frischgasverteiler weist eine Klappenanordnung auf, die eine Klappenwelle besitzt, an der wenigstens eine Klappe zum Steuern eines der vorgenannten Einlasskanäle angeordnet ist. Dabei ist die Klappenwelle um eine Klappenwellendrehachse drehbar gelagert. Der Frischgasverteiler besitzt außerdem einen Gehäuseflansch, mit dem der Frischgasverteiler am Zylinderkopf befestigt werden kann. Die Klappenanordnung ist nun im Bereich des Gehäuseflansches in einem Verteilergehäuse des Frischgasverteilers angeordnet. Beim bekannten Frischgasverteiler schließt die Klappenanordnung an einer dem Zylinderkopf zugewandten Seite im Wesentlichen bündig mit dem Gehäuseflansch ab, so dass der Frischgasverteiler an einer dem Frischgasverteiler zugewandten ebenen Montageseite einfach befestigt werden kann.

Eine gattungsgemäße Brennkraftmaschine ist aus der EP 1 772 615 A2 bekannt. Weitere Frischgasverteiler sind aus der US 2009/194060 A1, EP 0 074 202 A1, US 2008/230034 A1 und US 2003/196640 A1 bekannt.

Die vorliegende Erfindung beschäftigt sich mit dem Problem, für eine derartige Brennkraftmaschine bzw. für einen zugehörigen Frischgasverteiler eine verbesserte Ausführungsform anzugeben, die sich insbesondere durch eine reduzierte Bauhöhe auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Klappenanordnung so am Verteilergehäuse anzubringen, dass die Klappenanordnung nach außen, also an einer für die Montage am Zylinderkopf vorgesehenen Seite über den Gehäuseflansch vorsteht. Durch diese Maßnahme kann im Inneren des Verteilergehäuses entsprechend Bauraum eingespart werden, so dass das Verteilergehäuse in dieser Montagerichtung mit einer reduzierten Bauhöhe realisierbar ist, ohne dass dadurch die gewünschten Strömungsverhältnisse im Inneren des Verteilergehäuses über Gebühr beeinträchtigt werden. Für die erfindungsgemäße Brennkraftmaschine bedeutet dies, dass am Zylinderkopf eine Vertiefung ausgebildet wird, in die der Frischgasverteiler im Bereich der Klappenanordnung eingesetzt werden kann. Somit wird ein Teil des für den Frischgasverteiler benötigten Bauraums in den Zylinderkopf hineinverlegt, nämlich in besagte Vertiefung. Innerhalb dieser Vertiefung beginnen bzw. münden die Einlasskanäle.

Bemerkenswert ist außerdem, dass die Klappenanordnung innerhalb des Verteilergehäuses angeordnet ist. Somit besitzt das Verteilergehäuse die Funktion eines herkömmlichen Zwischenflansches, der bei konventioneller Bauweise die Klappenanordnung enthält, außen an das Verteilergehäuse angebaut ist und im montierten Zustand zwischen dem Verteilergehäuse und dem Zylinderkopf angeordnet ist. Die hier vorgestellte Bauweise ermöglicht es somit, auf einen separaten Zwischenflansch zur Unterbringung der Klappenanordnung zu verzichten.

Erfindungsgemäß ist vorgesehen, dass beim Frischgasverteiler an einer nach innen gewandten Seite, also an einer im montierten Zustand vom Zylinderkopf abgewandten Seite der Klappenwelle eine dazu separate Antriebswelle angeordnet ist, die um eine parallel zur Klappenwellendrehachse verlaufende Antriebswellendrehachse drehbar gelagert ist. Diese Antriebswelle ist nun einerseits mit einem Klappenantrieb verbindbar bzw. im montierten Zustand verbunden, während sie andererseits über eine Verzahnung mit der Klappenwelle antriebsverbunden ist. Zum Verschwenken der Klappen bewirkt der Klappenantrieb somit ein Verdrehen der Antriebswelle, was über die Verzahnungsverbindung zwischen Antriebswelle und Klappenwelle zu einer Drehverstellung der Klappenwelle und somit zu einem entsprechenden Verschwenken der mit der Klappenwelle drehfest verbundenen Klappen führt. Bemerkenswert ist dabei, dass durch die Verwendung der Antriebswelle, die gegenüber der Klappenwelle in das Innere des Verteilergehäuses versetzt angeordnet ist, die Klappenwelle und somit wesentliche Komponenten der Klappenanordnung soweit nach außen über den Gehäuseflansch vorstehen können, dass ein direkter Antrieb der Klappenwelle aufgrund der Nähe zum Zylinderkopf nicht oder nur sehr aufwändig möglich ist. Die Antriebswelle ermöglicht somit einen indirekten Antrieb der Klappenwelle, wodurch es möglich ist, die Klappenwelle nahe am Zylinderkopf zu positionieren. Hierdurch wird das Einsetzen des vorstehenden Bereichs der Klappenanordnung in die Vertiefung des Zylinderkopfs erheblich vereinfacht.

Erfindungsgemäß umfasst die Verzahnungsverbindung zwischen Antriebswelle und Klappenwelle eine an der Klappenwelle angeordnete Eingangsverzahnung und eine an der Antriebswelle ausgebildete Ausgangsverzahnung, die miteinander in Eingriff stehen und somit einander kämmen.

Die Verzahnung zwischen Antriebswelle und Klappenwelle ist dabei zweckmäßig als Radialverzahnung mit axial verlaufenden Zähnen konzipiert, wodurch axiale Relativbewegungen zwischen der Antriebswelle und der Klappenwelle möglich sind. Diese Bauform ermöglicht es für die Klappenwelle größere Toleranzen bzw. gezielt ein größeres Radialspiel und/oder Axialspiel zu realisieren, um die Klappenwelle mit ihren fest daran angebrachten Klappen bezüglich eines Tragrahmens der Klappenanordnung, an dem die Klappenwelle drehbar gelagert ist, innerhalb vorbestimmter Grenzen beweglich zu halten. Hierdurch kann die Gefahr einer Anhaftung der Klappen am Klappenrahmen, die aufgrund von Verunreinigungen aufgrund rückgeführter Abgase und/oder Blow-by-Gase entstehen kann, reduziert werden. Somit lässt sich die Funktionssicherheit der Klappenanordnung steigern.

Entsprechend einer anderen vorteilhaften Ausführungsform kann die Antriebswelle das Verteilergehäuse durchsetzen, wobei die Antriebswelle dann zweckmäßig innerhalb des Verteilergehäuses mit der Klappenwelle antriebsverbunden ist, während sie außerhalb des Verteilergehäuses mit dem Klappenantrieb antriebsverbunden bzw. verbindbar ist. Durch diese Maßnahme kann eine Gehäusedurchführung versetzt zur Klappenwelle in einem Bereich realisiert werden, der einen hierfür ausreichenden Abstand zum Zylinderkopf besitzt.

Zweckmäßig kann die Antriebswelle mit einem Hauptlager am Verteilergehäuse drehbar gelagert sein, wobei dieses Hauptlager so ausgestaltet ist, dass es sowohl radiale als auch axiale Kräfte abstützt. Insbesondere kann es sich beim Hauptlager um eine Lagerbuchse handeln, die einen zylindrischen Mantel zur Realisierung eines Radialgleitlagers und einen vom Mantel radial abstehenden Kragen zur Realisierung eines Axialgleitlagers umfasst. Die axiale Abstützung erfolgt dabei für nach außen, also vom Inneren des Verteilergehäuses weg gerichtete Kräfte.

Zusätzlich zum Hauptlager kann zumindest ein Nebenlager vorgesehen sein, das axial beabstandet zum Hauptlager ebenfalls zur Lagerung der Antriebswelle am Verteilergehäuse dient. Im Unterschied zum Hauptlager ist das Nebenlager zweckmäßig so konzipiert, dass es nur radiale Kräfte aufnimmt. Dementsprechend ermöglicht das Nebenlager axiale Relativbewegungen zwischen der Antriebswelle und dem Verteilergehäuse.

Optional kann eine Antriebswellendichtung vorgesehen sein, welche die Antriebswelle gegenüber dem Gehäuse dichtet. Die Antriebswellendichtung umschließt dabei die Antriebswelle und ist bezüglich des Verteilergehäuses ortsfest angeordnet. Zweckmäßig erfolgt die Positionierung der Antriebswellendichtung im Verteilergehäuse derart, dass die Antriebswellendichtung die Antriebswelle nur radial, jedoch nicht axial berührt. Die Antriebswellendichtung ist somit insbesondere axial kontaktfrei zur Antriebswelle angeordnet.

Die Ausgangsverzahnung der Antriebswelle kann eine sich über 360° erstreckende, vollständige Verzahnung sein. Bevorzugt ist jedoch eine Ausführungsform, bei der die Ausgangsverzahnung durch ein Zahnradsegment gebildet ist, das sich über weniger als 360° erstreckt. Bevorzugt erstreckt sich das Zahnradsegment in der Umfangsrichtung über maximal 180° oder über maximal 120°.

Zur Antriebskopplung mit dem jeweiligen Klappenantrieb kann die Antriebswelle außerhalb des Verteilergehäuses mit einem Antriebshebel drehfest verbunden sein, mit dessen Hilfe beispielsweise ein Kurbeltrieb realisierbar ist. Der eigentliche Klappenantrieb kann dann durch einen elektrischen oder pneumatischen oder hydraulischen Stellmotor gebildet sein. Ebenso kann es sich um eine Druckdose als Antrieb handeln.

Bei einer anderen vorteilhaften Ausführungsform kann die Eingangsverzahnung an einem Zahnrad ausgebildet sein, das drehfest mit der Klappenwelle verbunden ist. Im Unterschied dazu ist die Ausgangsverzahnung zweckmäßig integral an der Antriebswelle ausgeformt. Das Zahnrad der Klappenwelle ist vorzugsweise axial beweglich an der Klappenwelle angeordnet, so dass Axialbewegungen zwischen Klappenwelle und Zahnrad möglich sind. Die drehfeste Kopplung kann beispielsweise mittels einer Formschlussverbindung zwischen der Klappenwelle und dem Zahnrad realisiert werden, wobei dann eine von einer Kreiskontur abweichende Außenkontur der Klappenwelle in eine dazu komplementäre Innenkontur des Zahnrads eingesetzt ist.

Die Eingangsverzahnung kann am Zahnrad über 360° umlaufend ausgestaltet sein. Bevorzugt ist jedoch eine Ausführungsform, bei der die Eingangsverzahnung als Zahnradsegment konzipiert ist, das am Zahnrad über weniger als 360° umläuft. Bevorzugt erstreckt sich das Zahnradsegment über maximal 180° oder maximal 120°.

Entsprechend einer anderen vorteilhaften Ausführungsform, die zusätzlich oder alternativ zu den vorstehenden Ausführungsformen des Zahnrads realisierbar ist, kann das Zahnrad an einer von der Klappenwelle abgewandten Stirnseite konvex geformt sein. Die konvexe Stirnseite des Zahnrads wirkt zweckmäßig mit einer der Stirnseite zugewandten Wand des Verteilergehäuses als Axialanschlag zusammen. Durch die konvexe Form der Stirnseite ergibt sich dabei eine im wesentlichen punktförmige Kontaktierung zwischen der Stirnseite und der zumindest im Bereich des Axialanschlags eben ausgestalteten Wand. Durch die punktförmige Kontaktierung können Reibungskräfte minimiert werden, die eine Drehverstellung der Klappenwelle behindern können.

Gemäß einer anderen vorteilhaften Weiterbildung kann das Zahnrad mit Hilfe eines Radiallagers an vorgenanntem Tragrahmen der Klappenanordnung gelagert sein.

Zusätzlich oder alternativ zu vorstehenden Merkmalen ist das Zahnrad zweckmäßig an einem axialen Ende der Klappenwelle angeordnet, wodurch es möglich ist, auch die Antriebswelle bezüglich der Klappenwellendrehachse an einem axialen Ende des Verteilergehäuses anzuordnen.

Erfindungsgemäß ist im Verteilergehäuse eine Trennwand oder Schutzwand angeordnet, die im Verteilergehäuse einen Getrieberaum von einem Gasverteilerraum trennt. Im Getrieberaum ist die Verzahnungsverbindung zwischen Antriebswelle und Klappenwelle angeordnet. Zweckmäßig erstreckt sich die Antriebswelle im Verteilergehäuse ausschließlich innerhalb des Getrieberaums. Im Unterschied dazu erfolgt im Gasverteilerraum die Aufteilung des dem Verteilergehäuse über einen zentralen Frischgaseingang zugeführten Frischgases auf die einzelnen Einlasskanäle des Zylinderkopfs. Dementsprechend sind im Gasverteilerraum die Klappen der Klappenanordnung angeordnet. Mit Hilfe der Trennwand kann somit eine im Wesentlichen gasdichte Abschottung des Getrieberaums vom Gasverteilerraum realisiert werden, wodurch die im Getrieberaum angeordneten Komponenten von Verunreinigungen der Frischgasströmung geschützt sind. Die Frischgasströmung kann neben Frischluft auch rückgeführtes Abgas und/oder rückgeführtes Blow-by-Gas enthalten, so dass das Frischgas die üblichen Verunreinigungen von rückgeführtem Abgas, z.B. Rußpartikel, sowie ggf. die üblichen Verunreinigungen von rückgeführtem Blow-by-Gas, wie z.B. Ölnebel, aufweisen kann. Derartige Verunreinigungen können zu einem Verkleben beweglicher Bauteile führen, was deren Funktion beeinträchtigen kann. Die Trennwand führt somit zu einer erhöhten Funktions- bzw. Betriebssicherheit der Klappenanordnung und somit des Frischgasverteilers.

Besonders vorteilhafte Ausgestaltungen der Erfindung verfügen an dem Verteilergehäuse über eine Aufnahme für die Trennwand. Diese Aufnahme kann form-, kraft-, oder stoffschlüssig ausgebildet sein. Bei einer formschlüssig ausgebildeten Aufnahme kann am Gehäuse eine vertiefte Nut vorgesehen sein, in welche die Trennwand nach Art einer Nut-Feder-Verbindung eingesteckt und/oder eingeklebt ist. Bei anderen Ausgestaltungen kann die Aufnahme auch als auskragende Kontur ausgeführt sein, welche derart mit der Trennwand zusammenwirkt, dass eine formschlüssige Verbindung gebildet ist. Bei anderen Ausgestaltungen kann durch einen Kleberauftrag oder eine Schweißverbindung eine stoffschlüssige Verbindung zwischen der Trennwand und dem Verteilergehäuse gebildet werden. Diese bildet weiterhin eine Dichtung aus, welche den Schmutzeintrag in den Getriebebereich verhindert. Der Getriebebereich ist hierbei der durch die Trennwand abgetrennte Bereich, in dem sich die Verzahnungsverbindung des Antriebes befindet.

Bei weiteren Ausgestaltungen mit einer vertieften Aufnahme, kann das Verteilergehäuse über einen, im Bereich der Aufnahme angeordneten, Wulst verfügen, welcher auf der Innenseite des Verteilergehäuses eine Nut besitzt.

Gemäß einer anderen vorteilhaften Ausführungsform kann die Klappenanordnung wie bereits weiter oben erwähnt, einen Tragrahmen aufweisen, an dem die Klappenwelle drehbar gelagert ist und der für jede Klappe eine mit der jeweiligen Klappe gesteuerte Ausgangsöffnung aufweist. Im montierten Zustand ist dann diese Ausgangsöffnung dem jeweiligen Einlasskanal vorgeschaltet, so dass der durchströmbare Querschnitt der gesteuerten Auslassöffnung den durchströmbaren Querschnitt des zugehörigen bzw. zugeordneten Einlasskanals bestimmt. Durch Verdrehen der jeweiligen Klappe kann somit der durchströmbare Querschnitt des zugeordneten Einlasskanals gesteuert werden.

Bei einer speziellen Ausführungsform kann der Zylinderkopf für den jeweiligen Brennraum zwei Einlasskanäle aufweisen. Zweckmäßig besitzt der Tragrahmen dann ebenfalls für den jeweiligen Brennraum zwei Ausgangsöffnungen, wobei zweckmäßig nur eine dieser Öffnungen je Brennraum mit Hilfe der jeweiligen Klappe gesteuert werden kann. Dementsprechend besitzt der Tragrahmen dann je Brennraum eine gesteuerte Ausgangsöffnung und eine ungesteuerte Ausgangsöffnung. Die jeweilige Klappe ist dabei nur der gesteuerten Ausgangsöffnung zugeordnet, um deren durchströmbaren Querschnitt abhängig von ihrer Drehlage zu steuern.

Sofern der Zylinderkopf mehrere Brennräume aufweist, können diese zweckmäßig in einer geradlinigen Reihe nebeneinander angeordnet sein. Auch die Einlasskanäle sind dann zweckmäßig in einer geradlinigen Reihe nebeneinander angeordnet. Die Klappenwelle erstreckt sich dabei parallel zu dieser geradlinigen Reihe der Brennräume bzw. der Einlasskanäle. Beim zugehörigen Tragrahmen erstrecken sich dann auch die Ausgangsöffnungen geradlinig und parallel zur Klappenwelle nebeneinander. Sofern je Brennraum eine gesteuerte Ausgangsöffnung und eine ungesteuerte Ausgangsöffnung vorgesehen sind, wechseln sich in der in Längsrichtung der Klappenwelle gesteuerte und ungesteuerte Ausgangsöffnungen ab.

Gemäß einer vorteilhaften Ausführungsform kann nun die vorstehend genannte Trennwand integral am Tragrahmen ausgeformt sein, wodurch der Tragrahmen eine zusätzliche Funktionalität besitzt. Gleichzeitig kann auf diese Weise die Trennwand in den Frischgasverteiler integriert werden, ohne dass sich dabei der Montageaufwand für die Herstellung des Frischgasverteilers erhöht.

Gemäß einer anderen vorteilhaften Ausführungsform kann der Gehäuseflansch eine dem Zylinderkopf zugewandte Stirnseite aufweisen, an welcher der Tragrahmen mit einem seitlichen Rand axial anliegt. Das bedeutet, dass der Rand des Tragrahmens im Einbauzustand axial zwischen der Stirnseite des Gehäuseflansches und einem Boden der Vertiefung des Zylinderkopfs angeordnet ist. Auf diese Weise lässt sich eine besonders stabile Positionierung und Halterung für die Klappenanordnung realisieren, da sie durch die Befestigung des Gehäuseflansches am Zylinderkopf zwischen Gehäuseflansch und Zylinderkopf formschlüssig aufgenommen und insbesondere axial verspannt wird.

Gemäß einer anderen vorteilhaften Ausführungsform kann der Gehäuseflansch eine dem Zylinderkopf zugewandte Aufnahmeöffnung des Verteilergehäuses in der Umfangsrichtung umschließen. In diese Aufnahmeöffnung ist die Klappenanordnung eingesetzt. Mit anderen Worten, das Verteilergehäuse selbst besitzt nur eine einzige Öffnung, nämlich die Aufnahmeöffnung, durch welche das Frischgas austreten kann. Die Aufteilung auf die einzelnen Ausgangsöffnungen, die den Einlasskanälen zugeordnet sind, erfolgt erst durch den Einbau der Klappenanordnung, welche die Ausgangsöffnungen, insbesondere am Tragrahmen, aufweist. Gemäß einer vorteilhaften Ausführungsform kann der Gehäuseflansch an einem innen liegenden seitlichen Rand einen in Richtung zum Zylinderkopf abstehenden, die Aufnahmeöffnung einfassenden Kragen aufweisen, der die Stirnseite aufweist, an welcher der Rand des Tragrahmens axial anliegt. Am Gehäuseflansch wird dadurch mit Hilfe des Kragens eine Art Niederhalter realisiert, der gemeinsam mit dem über den Gehäuseflansch vorstehenden Bereich der Klappenanordnung in die Vertiefung des Zylinderkopfs eingreift. Auch hierdurch wird die Bauhöhe des Frischgasverteilers in dessen Montagerichtung reduziert. Gleichzeitig vereinfacht sich dadurch die Festlegung der Klappenanordnung zwischen Zylinderkopf und Gehäuseflansch.

Bei einer anderen vorteilhaften Ausführungsform kann der Gehäuseflansch an einer die Vertiefung in der Umfangsrichtung umschließenden Einfassung des Zylinderkopfs befestigt sein. Mit anderen Worten, der Gehäuseflansch selbst taucht im Wesentlichen nicht in die Vertiefung ein, sondern verbleibt in der vorgesehenen Montageebene zwischen Zylinderkopf und Frischgasverteiler. Lediglich der zuvor genannte Kragen des Gehäuseflansches kann in die Vertiefung eingreifen. Durch diese Konfiguration muss am Zylinderkopf keine umfassende Neukonstruktion stattfinden, da insbesondere die Befestigungsstellen zwischen Gehäuseflansch und Zylinderkopf im Bereich der Einfassung erhalten bleiben können. Lediglich innerhalb der Einfassung muss die Vertiefung im Zylinderkopf vorgesehen werden.

Zweckmäßig kann zumindest eine in der Umfangsrichtung geschlossen umlaufende Verteilerdichtung vorgesehen sein, die axial zwischen dem Gehäuseflansch und der Einfassung angeordnet ist. Zur besseren Positionierung der axial wirkenden Verteilerdichtung kann optional vorgesehen sein, dass in dem Gehäuseflansch eine umlaufende Aufnahmenut ausgebildet ist, in welche die Verteilerdichtung axial eingreift. Zusätzlich oder alternativ kann in die Einfassung des Zylinderkopfs eine umlaufende Aufnahmenut eingearbeitet sein, in welche die Verteilerdichtung axial eingreift.

Ein erfindungsgemäßer Frischgasverteiler, der bei einer Brennkraftmaschine der vorstehend beschriebenen Art zur Zuführung von Frischgas verwendet werden kann, besitzt somit eine Klappenanordnung der vorstehend beschriebenen Art sowie einen Gehäuseflansch der vorstehend beschriebenen Art. Ferner charakterisiert sich dieser Frischgasverteiler dadurch, dass zumindest ein Bereich der Klappenanordnung nach außen, also in Richtung Zylinderkopf, über den Gehäuseflansch vorsteht.

Vorzugsweise ist die Klappenanordnung vom Gehäuseflansch seitlich bzw. randseitig eingefasst. Insbesondere definiert der Gehäuseflansch eine Aufnahmeöffnung, in welche die Klappenanordnung eingesetzt ist. Somit besitzt das Verteilergehäuse die Funktion eines herkömmlichen Zwischenflansches, der bei konventioneller Bauweise die Klappenanordnung enthält, außen an das Verteilergehäuse angebaut ist und im montierten Zustand zwischen dem Verteilergehäuse und dem Zylinderkopf angeordnet ist.

Ferner ist beim erfindungsgemäßen Frischgasverteiler vorgesehen, dass das Verteilergehäuse eine gemeinsame Eingangsöffnung für Frischgas, eine gemeinsame Aufnahmeöffnung für die Klappenanordnung und dazwischen einen gemeinsamen Gasverteilerraum für Frischgas aufweist, der einlassseitig mit der Eingangsöffnung verbunden ist und an den auslassseitig die in die Aufnahmeöffnung eingesetzte Klappenanordnung anschließt. Hierdurch ist eine einteilige oder integrale Bauweise für das Verteilergehäuse vereinfacht, was eine preiswerte Herstellung begünstigt.

Des Weiteren charakterisiert sich die erfindungsgemäße Brennkraftmaschine, die einen Zylinderkopf der vorstehend beschriebenen Art aufweist und die mit einem Frischgasverteiler der vorstehend beschriebenen Art ausgerüstet werden kann, dadurch, dass sie an einer für die Montage des Frischgasverteilers vorgesehenen Montageseite eine Vertiefung aufweist, innerhalb der die Einlasskanäle mit ihren Einlassöffnungen angeordnet sind und in die der über den Gehäuseflansch des Frischgasverteilers überstehende Bereich der Klappenanordnung eintauchen kann, wenn der Frischgasverteiler am Zylinderkopf befestigt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen stark vereinfachten Längsschnitt einer Brennkraftmaschine im Bereich eines Frischgasverteilers,
- Fig. 2: eine auseinander gezogene, isometrische Darstellung des Frischgasverteilers
- Fig. 3 bis 5: jeweils einen Ausschnitt des Frischgasverteilers bei verschiedenen alternativen Ausgestaltungen.

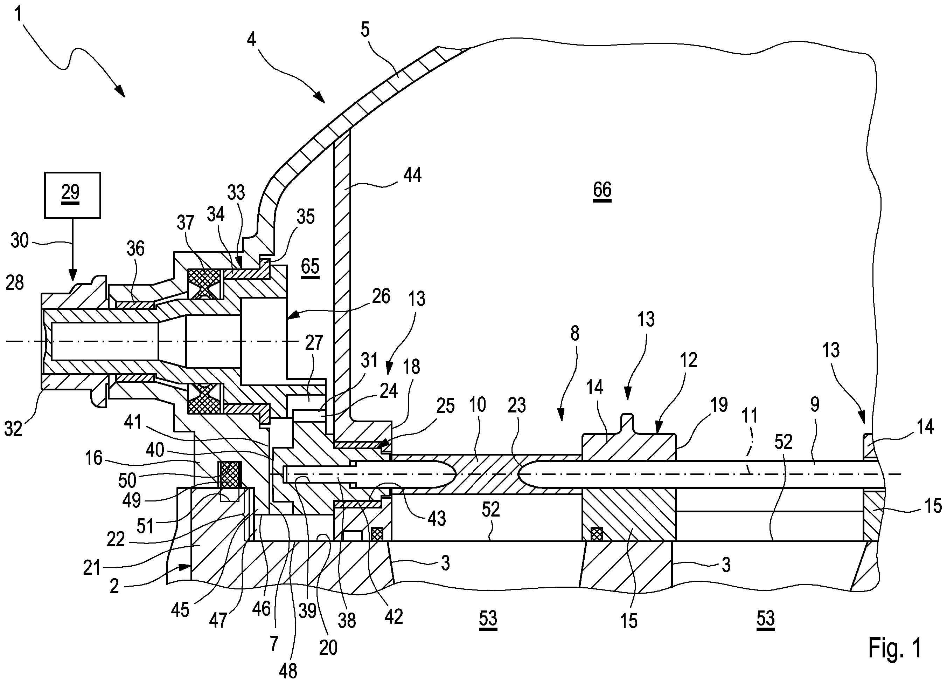

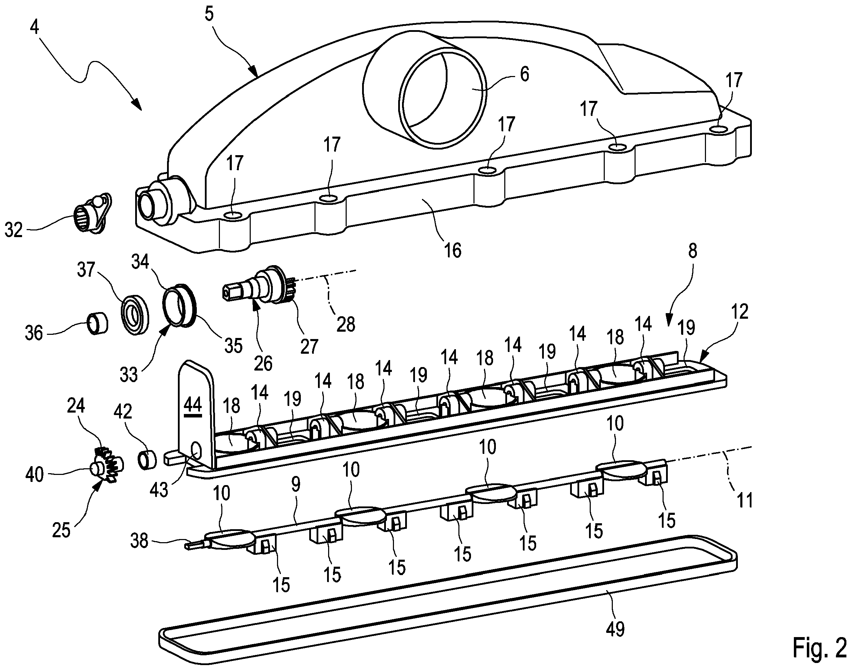

Entsprechend den Fig. 1 und 2 umfasst eine Brennkraftmaschine 1, die insbesondere in einem Kraftfahrzeug und dort vorzugsweise zum Antreiben des Fahrzeugs zur Anwendung kommen kann, einen hier nur teilweise erkennbaren Zylinderkopf 2, der mehrere, hier nur im Bereich von Einlassöffnungen 52 erkennbare Einlasskanäle 3 aufweist, die jeweils zu einem hier nicht erkennbaren und nur durch ein Bezugszeichen repräsentierten Brennraum 53 des Zylinderkopfs 2 führen. Zweckmäßig ist dabei eine Ausführungsform, bei der im Zylinderkopf 2 je Brennraum 53 zwei derartige Einlasskanäle 3 vorgesehen sind. Beispielsweise besitzt der Zylinderkopf 2 bei einem Vier-Zylinder-Motor vier Brennräume 53, denen jeweils zwei Einlasskanäle 3 zugeordnet sind, so dass insgesamt acht Einlasskanäle 3 vorgesehen sind.

Die Brennkraftmaschine 1 umfasst außerdem einen Frischgasverteiler 4, mit dessen Hilfe Frischgas den Einlasskanälen 3 zugeführt werden kann. Der Frischgasverteiler 4 umfasst ein Verteilergehäuse 5, das eine gemeinsame Eingangsöffnung 6 und an einer dem Zylinderkopf 2 zugewandten Seite eine Aufnahmeöffnung 7 besitzt. Der Frischgasverteiler 4 besitzt außerdem eine Klappenanordnung 8, die eine Klappenwelle 9 aufweist. Die Klappenwelle 9 weist je Brennraum 53 zumindest eine Klappe 10 auf, die drehfest mit der Klappenwelle 9 verbunden ist. Im Beispiel besitzt die Klappenwelle 9 je Brennraum 53 genau eine Klappe 10, so dass mit Hilfe der Klappenanordnung 8 nur jeder zweite Einlasskanal 3 gesteuert werden kann. Die Klappenwelle 9 ist um eine Klappenwellendrehachse 11 drehbar gelagert. Zweckmäßig besitzt die Klappenanordnung 8 hierzu einen Tragrahmen 12, an dem die Klappenwelle 9 drehbar gelagert ist. Zweckmäßig sind zum Lagern der Klappenwelle 9 hierfür mehrere Lagerstellen 13 vorgesehen. Die Lagerstellen 13 sind dabei jeweils beiderseits einer der Klappen 10 vorgesehen. Im Beispiel sind somit acht Lagerstellen 13 vorgesehen. Im Beispiel sind sieben der acht Lagerstellen 13 dadurch realisiert, dass jeweils eine erste Lagerhalbschale 14 integral am Tragrahmen 12 ausgeformt ist, während jeweils eine zweite Lagerhalbschale 15 bezüglich des Tragrahmens 12 ein separates Bauteil ist, das beispielsweise mittels einer Clipsverbindung an den Tragrahmen 12 angebaut und damit verrastet ist.

Der Frischgasverteiler 4 weist außerdem einen Gehäuseflansch 16 auf, der hier integral am Verteilergehäuse 5 an einer dem Zylinderkopf 2 zugewandten Seite ausgeformt ist. Der Gehäuseflansch 16 dient dazu, den Frischgasverteiler 4 am Zylinderkopf 2 zu befestigen. Dementsprechend besitzt der Gehäuseflansch 16 mehrere Durchgangsöffnungen 17 für Verschraubungen, die mit metallischen Hülsen ausgesteift sein können. Der Gehäuseflansch 16 selbst und das Verteilergehäuse 5 sind zweckmäßig aus Kunststoff hergestellt. Der Tragrahmen 12 besteht zweckmäßig ebenfalls aus Kunststoff.

Die Klappenanordnung 8 ist nun im Bereich des Gehäuseflansches 16 im Verteilergehäuse 5 angeordnet. Hierzu wird die Klappenanordnung 8 mit ihrem Tragrahmen 12 in die Aufnahmeöffnung 7 des Verteilergehäuses 5 eingesetzt. Das Verteilergehäuse 5 kann als einteiliges Kunststoffspritzformteil konzipiert sein. Das Verteilergehäuse 5 weist somit eine gemeinsame Eingangsöffnung 6 für das Frischgas, eine gemeinsame Aufnahmeöffnung 7zur Unterbringung der Klappenanordnung 8 und fluidisch dazwischen einen gemeinsamen Gasverteilerraum 66 für Frischgas auf, der einlassseitig mit der Eingangsöffnung 6 fluidisch verbunden ist und an den auslassseitig die in die Aufnahmeöffnung 7 eingesetzte Klappenanordnung 8 anschließt.

Am Tragrahmen 12 sind Ausgangsöffnungen 18, 19 ausgebildet, und zwar je Einlasskanal 3 eine Ausgangsöffnung 18, 19. Da somit doppelt so viele Ausgangsöffnungen 18, 19 vorgesehen sind, wie Klappen 10 vorhanden sind, ist nur jeder zweiten Ausgangsöffnung 18, 19 eine Klappe 10 zugeordnet. Die mit Hilfe der jeweiligen Klappe 10 steuerbare Ausgangsöffnung 18 wird im Folgenden als gesteuerte Ausgangsöffnung 18 bezeichnet, während die jeweils andere, demselben Brennraum 53 zugeordnete Ausgangsöffnung 19, der keine Klappe 10 zugeordnet ist, im Folgenden als ungesteuerte Ausgangsöffnung 19 bezeichnet wird. Die den Einlasskanälen 3 zugeordneten Ausgangsöffnungen 18, 19 werden am Frischgasverteiler 4 somit erst durch das Einsetzen der Klappenanordnung 8 ausgebildet.

Gemäß Fig. 1 weist der Zylinderkopf 2 an einer dem Frischgasverteiler 4 zugewandten Montageseite eine Vertiefung 20 auf, die von einer in der Umfangsrichtung geschlossen umlaufenden Einfassung 21 umschlossen ist. Der Frischgasverteiler 4 besitzt nun gemäß Fig. 1 einen nach außen, also in Richtung zum Zylinderkopf 2 über den Gehäuseflansch 16 vorstehenden Bereich 22, der in Fig. 1 durch eine geschweifte Klammer gekennzeichnet ist. Hierbei handelt es sich im Wesentlichen um einen Bereich 22 der Klappenanordnung 8, der in der genannten Richtung, die der Montagerichtung des Frischgasverteilers 4 entspricht, über den Gehäuseflansch 16 vorsteht.

Die Klappen 10 bestehen aus Kunststoff und sind an die Klappenwelle 9 zweckmäßig angespritzt, dabei kann die Klappenwelle 9 gemäß Fig. 1 im Bereich der jeweiligen Klappe 10 einen Durchbruch oder Schlitz 23 aufweisen, so dass der angespritzte Kunststoff der Klappe 10 die Klappenwelle 9 formschlüssig durchdringt und dabei besagten Schlitz 23 ausfüllt. Die Klappenwelle 9 ist außerdem mit einer Eingangsverzahnung 24 versehen, die zweckmäßig an einem Zahnrad 25 ausgebildet ist, das drehfest mit der Klappenwelle 9 verbunden ist. Die Klappenanordnung 8 umfasst außerdem eine Antriebswelle 26, die eine Ausgangsverzahnung 27 aufweist und die an einer vom Zylinderkopf 2 abgewandten Seite der Klappenwelle 9 am Verteilergehäuse 5 gelagert ist. Dabei ist die Antriebswelle 26 um eine Antriebswellendrehachse 28 drehbar gelagert, die sich parallel zur Klappenwellendrehachse 11 erstreckt. Zweckmäßig können die beiden Drehachsen 11, 28 in einer Ebene liegen, die senkrecht zur Ebene der Montageseite des Zylinderkopfs 2 verläuft und/oder in der die Montagerichtung liegt.

Die Antriebswelle 26 ist dabei am Verteilergehäuse 5 so angeordnet, dass ihre Ausgangsverzahnung 27 die Eingangsverzahnung 24 des Zahnrads 25 kämmt. Ferner ist die Antriebswelle 26 mit einem in Fig. 1 nur vereinfacht dargestellten Klappenantrieb 29 antriebsverbunden, wobei eine entsprechende Antriebsverbindung in Fig. 1 durch einen Pfeil 30 angedeutet ist. Zweckmäßig durchsetzt die Antriebswelle 26 das Verteilergehäuse 5. Innerhalb des Verteilergehäuses 5 ist nun die Antriebwelle 26 über die mit Hilfe der Eingangsverzahnung 24 und der Ausgangsverzahnung 27 gebildeten Verzahnungsverbindung 31 mit der Klappenwelle 9 antriebsverbunden. Außerhalb des Verteilergehäuses 5 ist die Antriebswelle 26 dagegen mit dem Klappenantrieb 29 antriebsverbunden. Beispielsweise kann die Antriebswelle 26 hierzu mit einem Antriebshebel 32 drehfest verbunden sein, mit dessen Hilfe beispielsweise ein Kurbeltrieb realisierbar ist. Die Antriebswelle 26 ist am Verteilergehäuse 5 mit Hilfe eines Hauptlagers 33 drehbar gelagert. Das Hauptlager 33 ist dabei so konzipiert, dass es bezüglich der Antriebswellendrehachse 28 sowohl radiale als auch axiale Kräfte abstützt. Hierzu ist das Hauptlager 33 beispielsweise als Lagerbuchse, vorzugsweise in Form einer zylindrischen Hülse 34 gebildet, die ein Radialgleitlager repräsentiert und die einen radial abstehenden Ringkragen 35 aufweist, der an einer dem Innenraum des Verteilergehäuses 5 zugewandten Seite ein Axialgleitlager repräsentiert. Im Beispiel ist außerdem ein Nebenlager 36 in Form einer zylindrischen Hülse zur Realisierung eines Radialgleitlagers vorgesehen, das axial beabstandet zum Hauptlager 33 angeordnet ist und nur radiale Kräfte aufnimmt. Des Weiteren ist eine Antriebswellendichtung 37 vorgesehen, die beispielsweise als X-Ring konzipiert sein kann. Die Antriebswellendichtung 37 ist im Beispiel axial zwischen dem Hauptlager 33 und dem Nebenlager 36 angeordnet. Die Antriebswellendichtung 37 ist drehfest am Verteilergehäuse 5 angeordnet und axial kontaktfrei zur Antriebswelle 26 positioniert. Somit steht die Antriebswellendichtung 37 nur radial mit der Antriebswelle 26 in Kontakt.

Gemäß der hier gezeigten, bevorzugten Ausführungsform ist die Ausgangsverzahnung 27 der Antriebswelle 26 als Zahnradsegment konzipiert, so dass sich die Ausgangsverzahnung 27 über weniger als 360° erstreckt. Analog dazu ist die Eingangsverzahnung 24 des Zahnrads 25 zweckmäßig ebenfalls als Zahnradsegment konzipiert, das sich über weniger als 360° erstreckt. Das Zahnrad 25 ist drehfest mit der Klappenwelle 9 verbunden. Beispielsweise kann die Klappenwelle 9 hierzu an einem ihren axialen Enden abgeflacht sein, so dass eine entsprechende Abflachung 38 dann in eine dazu komplementäre Öffnung 39 des Zahnrads 25 axial einführbar ist, um in der Drehrichtung einen Formschluss zu realisieren. Bevorzugt ist dabei eine Kopplung zwischen Zahnrad 25 und Klappenwelle 9, bei welcher das Zahnrad 25 axial beweglich an der Klappenwelle 9 angeordnet ist. Im Beispiel besitzt das Zahnrad 25 an einer von der Klappenwelle 9 abgewandten Stirnseite 40 eine konvexe Form, die insbesondere bezüglich der Klappenwellendrehachse 11 rotationssymmetrisch ist. Diese konvexe Stirnseite 40 liegt im Einbauzustand einer ebenen Wand 41 des Verteilergehäuses 5 gegenüber, mit der sie als Axialanschlag zusammenwirkt. Die konvexe Stirnseite 40 ermöglicht dabei eine punktförmige Kontaktierung mit besagter Wand 41. Das Zahnrad 25 ist mit Hilfe eines Radiallagers 42 am Tragrahmen 12 drehbar gelagert. Hierzu ist das Radiallager 42 in Form einer Hülse in eine Lageröffnung 43 eingesetzt, die am Tragrahmen 12 ausgebildet ist. Die Lagerung des Zahnrads 25 definiert dabei die achte Lagerstelle 13 für die Klappenwelle 9 am Tragrahmen 12.

Im Verteilergehäuse 5 ist außerdem eine Trennwand 44 angeordnet, die einen Getrieberaum 65 von einem Gasverteilerraum 66 im Wesentlichen hinreichend gasdicht trennt. Im Getrieberaum 65 befinden sich die Eingangsverzahnung 24 und die Ausgangsverzahnung 27. Somit sind im Getrieberaum 65 wesentliche Abschnitte der Antriebswelle 66 und des Zahnrads 25 angeordnet. Im Unterschied dazu sind im Gasverteilerraum 66 die Klappen 10 angeordnet sowie die Ausgangsöffnungen 18, 19. Somit dient der Gasverteilerraum 66 im Wesentlichen nur zur Strömungsführung bzw. zur Strömungsaufteilung auf die einzelnen Ausgangsöffnungen 18, 19. Die Trennwand 44 ist im Beispiel integral am Tragrahmen 12 ausgeformt.

Der Gehäuseflansch 16 umschließt in der Umfangsrichtung die Aufnahmeöffnung 7, in welche die Klappenanordnung 8 eingesetzt ist. Gemäß Fig. 1 besitzt der Gehäuseflansch 16 an einem innen liegenden seitlichen Rand einen Kragen 45, der in Richtung zum Zylinderkopf 2 vom übrigen Gehäuseflansch 16 vorsteht und der ebenfalls die Aufnahmeöffnung 7 in der Umfangsrichtung geschlossen umlaufend einfasst. An diesem Kragen 45 besitzt der Gehäuseflansch 16 nun eine dem Zylinderkopf 2 zugewandte Stirnseite 46, an der ein seitlicher Rand 47 des Tragrahmens 12 axial, also in der Montagerichtung anliegt. Im montierten Zustand gemäß Fig. 1 ist somit besagter seitlicher Rand 47 axial zwischen der Stirnseite 46 des Gehäuseflansches 16 und einem Boden 48 der Vertiefung 20 des Zylinderkopfs 2 angeordnet. Insbesondere kann dabei der Gehäuseflansch 16 mit seinem Kragen 45 den Tragrahmen 12 mit dem Boden 48 der Vertiefung 20, also mit dem Zylinderkopf 2, verspannen. Der Gehäuseflansch 16 ist dabei mit Hilfe seiner Durchgangsöffnungen 17 an der Einfassung 21 des Zylinderkopfs 2 befestigt, also außerhalb der Vertiefung 20.

Der Frischgasverteiler 4 umfasst außerdem eine Verteilerdichtung 49, die im Bereich des Gehäuseflansches 16 und im Bereich der Einfassung 21 angeordnet ist und in der Umfangsrichtung geschlossen umläuft. Zur Positionierung der Verteilerdichtung 49 kann in den Gehäuseflansch 16 eine entsprechende Aufnahmenut 50 eingearbeitet sein. Zusätzlich oder alternativ kann in die Einfassung 21 eine entsprechende Aufnahmenut 51 eingearbeitet sein. Zweckmäßig ist jedoch nur eine einzige Aufnahmenut 50, 51 vorgesehen, nämlich nur im Gehäuseflansch 16.

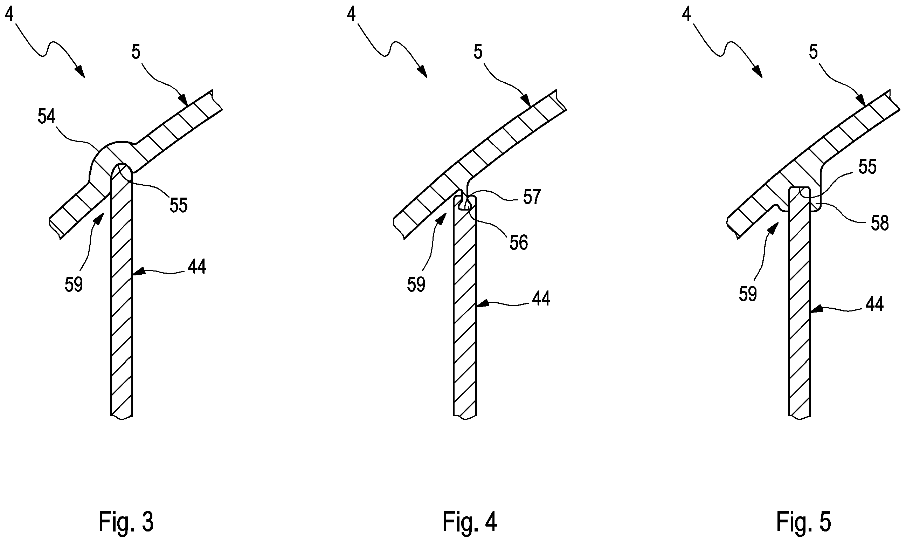

In Figur 3 ist ein Ausschnitt des Frischluftverteilers 4' in einer alternativen Ausgestaltung dargestellt. Hierbei verfügt das Verteilergehäuse 5 über einen im Bereich der Trennwand 44 umlaufenden, nach außen weisenden Wulst 54. Innerhalb des Verteilergehäuses 5 ist eine Aufnahmenut 55 angeordnet, in welche die Trennwand 44 eingreift und so eine Abdichtung erzeugt.

In Figur 4 ist eine weitere Alternative des gleichen Ausschnitts des Verteilergehäuses 4 dargestellt. Gemäß dieser Ausführung verfügt das Verteilergehäuse 5 über eine nach innen ragende Kontur 56, welche in der Trennwand 44 wieder in einer Nut 57 aufgenommen wird und so eine dichte Verbindung bildet. Diese Verbindung kann auch als Clipsverbindung realisiert sein, die quer zur Längsrichtung der Nut 57 steckbar ist. Die dargestellte Zapfenform der Kontur 56 kann jedoch durch andere geometrische Ausgestaltungen ersetzt werden, welche eine Nut-Feder-Verbindung bilden. Weiterhin muss die Feder (Kontur 56) nicht umlaufend um die Trennwand 44 ausgeführt sein, da auch eine in Teilbereichen angeordnete Feder 56 eine ausreichende Verbindung bewirkt.

In Fig. 5 ist an einer Innenseite des Verteilergehäuses 4 ein Wulst 58 ausgebildet, der die Nut 55 enthält, in welche die Trennwand 44 eingesteckt ist. Bei allen Varianten der Fig. 3 bis 5 ist die Nut-Feder-Verbindung mit 59 bezeichnet.

## Patentansprüche

1. Frischgasverteiler zum Zuführen von Frischgas zu Einlasskanälen (3) einer Brennkraftmaschine (1), insbesondere eines Kraftfahrzeugs,
- mit einer Klappenanordnung (8), die eine Klappenwelle (9) aufweist, die wenigstens eine Klappe (10) zum Steuern eines solchen Einlasskanals (3) trägt und um eine Klappenwellendrehachse (11) drehbar gelagert ist,
- mit einem Gehäuseflansch (16), mit dem der Frischgasverteiler (4) an der Brennkraftmaschine (1) befestigt werden kann,
- wobei die Klappenanordnung (8) im Bereich des Gehäuseflansches (16) in einem Verteilergehäuse (5) des Frischgasverteilers (4) angeordnet ist,
- wobei ein Bereich (22) der Klappenanordnung (8) nach außen über den Gehäuseflansch (16) vorsteht,
- wobei die Klappenwelle (9) eine Eingangsverzahnung (24) aufweist,
- wobei an einer nach innen gewandten Seite der Klappenwelle (9) eine Antriebswelle (26) angeordnet ist, die um eine parallel zur Klappenwellendrehachse (11) verlaufende Antriebswellendrehachse (28) drehbar gelagert ist und die eine mit der Eingangsverzahnung (24) kämmende Ausgangsverzahnung (27) aufweist,
- wobei die Antriebswelle (26) mit einem Klappenantrieb (29) verbunden oder verbindbar ist,
- wobei das Verteilergehäuse (5) eine gemeinsame Eingangsöffnung (6) für Frischgas, eine gemeinsame Aufnahmeöffnung (7) und dazwischen einen gemeinsamen Gasverteilerraum (66) für Frischgas aufweist, der einlassseitig mit der Eingangsöffnung (6) verbunden ist und an den auslassseitig die in die Aufnahmeöffnung (7) eingesetzte Klappenanordnung (8) anschließt,
**dadurch gekennzeichnet,**
**dass** im Verteilergehäuse (5) eine Trennwand (44) angeordnet ist, die einen Getrieberaum (65), in dem die Eingangsverzahnung (24) und die Ausgangsverzahnung (27) angeordnet sind, von einem Gasverteilerraum (66) trennt, in dem die wenigstens eine Klappe (10) angeordnet ist.

2. Frischgasverteiler nach Anspruch 1,
**dadurch gekennzeichnet,**
**dass** die Klappenanordnung (8) vom Gehäuseflansch (16) seitlich eingefasst ist.

3. Brennkraftmaschine, insbesondere für ein Kraftfahrzeug,
- mit einem Zylinderkopf (2), der mehrere, zu Brennräumen (53) der Brennkraftmaschine (1) führende Einlasskanäle (3) aufweist,
- mit einem Frischgasverteiler (4) nach Anspruch 1 oder 2 zum Zuführen von Frischgas zu den Einlasskanälen (3),
- wobei der Frischgasverteiler (4) mit dem Gehäuseflansch (16) am Zylinderkopf (2) befestigt ist,
- wobei der Zylinderkopf (2) eine Vertiefung (20) aufweist, in die der Frischgasverteiler (4) im Bereich der Klappenanordnung (8) eingesetzt ist,
- wobei der in die Vertiefung (20) eingesetzte Bereich (22) der Klappenanordnung (8) über den Gehäuseflansch (16) in Richtung zum Zylinderkopf (2) vorsteht,
- wobei die Antriebswelle (26) an einer vom Zylinderkopf (2) abgewandten Seite der Klappenwelle (9) angeordnet ist.

4. Brennkraftmaschine nach Anspruch 3,
**dadurch gekennzeichnet,**
**dass** die Antriebswelle (26) das Verteilergehäuse (5) durchsetzt, innerhalb des Verteilergehäuses (5) mit der Klappenwelle (9) antriebsverbunden ist und außerhalb des Verteilergehäuses (5) mit dem Klappenantrieb (29) antriebsverbunden oder antriebsverbindbar ist.

5. Brennkraftmaschine nach Anspruch 3 oder 4,
**dadurch gekennzeichnet,**
**dass** die Antriebswelle (26) mit einem Hauptlager (33) am Verteilergehäuse (5) drehbar gelagert ist, das sowohl radiale als auch axiale Kräfte abstützt.

6. Brennkraftmaschine nach einem der Ansprüche 3 bis 5,
**dadurch gekennzeichnet,**
**dass** die Eingangsverzahnung (24) an einem Zahnrad (25) ausgebildet ist, das drehfest mit der Klappenwelle (9) verbunden ist und das axial beweglich an der Klappenwelle (9) angeordnet ist.

7. Brennkraftmaschine nach Anspruch 6,
**dadurch gekennzeichnet,**
**dass** das Zahnrad (25) an einer von der Klappenwelle (9) abgewandten Stirnseite (40) konvex geformt ist, wobei die konvexe Stirnseite (40) mit einer der Stirnseite (40) zugewandten Wand (41) des Verteilergehäuses (5) als Axialanschlag zusammenwirkt.

8. Brennkraftmaschine nach einem der Ansprüche 3 bis 7,
**dadurch gekennzeichnet,**
**dass** die Klappenanordnung (8) einen Tragrahmen (12) aufweist, an dem die Klappenwelle (9) drehbar gelagert ist und der für jede Klappe (10) eine mit der jeweiligen Klappe (10) gesteuerte Ausgangsöffnung (18) aufweist.

9. Brennkraftmaschine nach Anspruch 8,
**dadurch gekennzeichnet,**
**dass** die Trennwand (44) integral am Tragrahmen (12) ausgeformt ist.

10. Brennkraftmaschine nach Anspruch 8 oder 9,
**dadurch gekennzeichnet,**
**dass** der Gehäuseflansch (16) eine dem Zylinderkopf (2) zugewandte Stirnseite (46) aufweist, an welcher der Tragrahmen (12) mit einem seitlichen Rand (47) axial anliegt.

11. Brennkraftmaschine nach Anspruch 10,
**dadurch gekennzeichnet,**
- **dass** der Gehäuseflansch (16) eine dem Zylinderkopf (2) zugewandte Aufnahmeöffnung (7) des Verteilergehäuses (5) in der Umfangsrichtung umschließt, in welche die Klappenanordnung (8) eingesetzt ist,
- **dass** der Gehäuseflansch (16) an einem innen liegenden seitlichen Rand einen in Richtung zum Zylinderkopf (2) abstehenden, die Aufnahmeöffnung (7) einfassenden Kragen (45) aufweist, der die Stirnseite (46) aufweist, an welcher der Rand (47) des Tragrahmens (12) axial anliegt.

12. Brennkraftmaschine nach einem der Ansprüche 3 bis 11,
**dadurch gekennzeichnet,**
**dass** der Gehäuseflansch (16) an einer die Vertiefung (20) in der Umfangsrichtung umschließenden Einfassung (21) des Zylinderkopfs (2) befestigt ist.

13. Brennkraftmaschine nach einem der Ansprüche 3 bis 12,
**dadurch gekennzeichnet,**
**dass** die Trennwand (44) über eine Nut-Feder-Verbindung (59) mit dem Verteilergehäuse (4) in Verbindung steht.

## Claims

1. An internal combustion engine, in particular for a motor vehicle,
- having a cylinder head (2), which has a plurality of intake channels (3), which lead to combustion chambers (53) of the internal combustion engine (1),
- having a fresh gas distributor (4) for feeding fresh gas to the intake channels (3),
- wherein the fresh gas distributor (4) has a flap arrangement (8), which has a flap shaft (9), which bears at least one flap (10) for controlling such an intake channel (3) and is mounted such that it can rotate about a flap shaft rotation axis (11),
- wherein the fresh gas distributor (4) has a housing flange (16), with which the fresh gas distributor (4) is fastened to the cylinder head (2),
- wherein the flap arrangement (8) is arranged in the region of the housing flange (16) in a distributor housing (5) of the fresh gas distributor (4),
- wherein the cylinder head (2) has a recess (20), into which the fresh gas distributor (4) is inserted in the region of the flap arrangement (8),
- wherein the region (22) of the flap arrangement (8) that is inserted into the recess (20) projects beyond the housing flange (16) in the direction of the cylinder head (2),
- wherein the flap shaft (9) has input teeth (24),
- wherein a drive shaft (26) is arranged on a side of the flap shaft (9) that faces away from the cylinder head (2), which drive shaft is mounted such that it can rotate about a drive shaft rotation axis (28) running parallel to the flap shaft rotation axis (11) and has output teeth (27) that mesh with the input teeth (24),
- wherein the drive shaft (26) is connected or can be connected to a flap drive (29),
**characterised in that**
a partition (44) is arranged in the distributor housing (5), which partition separates a gearing space (65), in which the input teeth (24) and the output teeth (27) are arranged, from a gas distributor space (66), in which the at least one flap (10) is arranged.

2. The internal combustion engine according to Claim 1,
**characterised in that**
the drive shaft (26) penetrates the distributor housing (5), is drive-connected to the flap shaft (9) inside the distributor housing (5) and is drive-connected or can be drive-connected to the flap drive (29) outside the distributor housing (5).

3. The internal combustion engine according to Claim 1 or 2,
**characterised in that**
the drive shaft (26) is mounted rotatably on the distributor housing (5) with a main bearing (33), which supports both radial and axial forces.

4. The internal combustion engine according to any one of Claims 1 to 3,
**characterised in that**
the input teeth (24) are formed on a gearwheel (25), which is connected in a rotationally fixed manner to the flap shaft (9) and is arranged on the flap shaft (9) in an axially movable manner.

5. The internal combustion engine according to Claim 4,
**characterised in that**
the gearwheel (25) is convex on an end face (40) that faces away from the flap shaft (9), wherein the convex end face (40) interacts as an axial stop with a wall (41) of the distributor housing (5) that faces the end face (40).

6. The internal combustion engine according to any one of Claims 1 to 5,
**characterised in that**
the flap arrangement (8) has a support frame (12), on which the flap shaft (9) is rotatably mounted and which has for each flap (10) an outlet opening (18) that is controlled by the respective flap (10).

7. The internal combustion engine according to Claims 6 and 6,
**characterised in that**
the partition (44) is formed integrally on the support frame (12).

8. The internal combustion engine according to Claim 7 or 7,
**characterised in that**
the housing flange (16) has an end face (46) facing the cylinder head (2), against which end face the support frame (12) bears with a lateral edge (47).

9. The internal combustion engine according to Claim 8,
**characterised in that**
- the housing flange (16) encloses in the circumferential direction a receiving opening (7) of the distributor housing (5) that faces the cylinder head (2) and into which the flap arrangement (8) is inserted,
- the housing flange (16) has on an inner lateral edge a collar (45), which projects in the direction of the cylinder head (2), encloses the receiving opening (7) and has the end face (46) against which the edge (47) of the support frame (12) axially bears.

10. The internal combustion engine according to any one of Claims 1 to 9,
**characterised in that**
the housing flange (16) is fastened to an enclosure (21) of the cylinder head (2) that encloses the recess (20) in the circumferential direction.

11. The internal combustion engine according to any one of the preceding Claims,
**characterised in that**
the partition (44) is connected to the distributor housing (4) by means of a tongue and groove connection (59) .

12. A fresh gas distributor for feeding fresh gas to intake channels (3) of an internal combustion engine (1), in particular of a motor vehicle,
- having a flap arrangement (8), which has a flap shaft (9), which bears at least one flap (10) for controlling such an intake channel (3) and is mounted such that it can rotate about a flap shaft rotation axis (11),
- having a housing flange (16), with which the fresh gas distributor (4) can be fastened to the internal combustion engine (1),
- wherein the flap arrangement (8) is arranged in the region of the housing flange (16) in a distributor housing (5) of the fresh gas distributor (4),
- wherein a region (22) of the flap arrangement (8) projects outwardly beyond the housing flange (16),
- wherein the flap shaft (9) has input teeth (24),
- wherein a drive shaft (26) is arranged on an inwardly facing side of the flap shaft (9), which drive shaft is mounted such that it can rotate about a drive shaft rotation axis (28) running parallel to the flap shaft rotation axis (11) and has output teeth (27) that mesh with the input teeth (24),
- wherein the drive shaft (26) is connected or can be connected to a flap drive (29),
- wherein the distributor housing (5) has a common inlet opening (6) for the fresh gas, a common receiving opening (7) and a common gas distributor space (66) for fresh gas therebetween, which is connected on the inlet side to the inlet opening (6) and to which on the outlet side the flap arrangement (8) inserted into the receiving opening (7) adjoins,
**characterized in that**
a partition (44) is arranged in the distributor housing (5), which partition separates a gearing space (65), in which the input teeth (24) and the output teeth (27) are arranged, from a gas distributor space (66), in which the at least one flap (10) is arranged.

13. The fresh gas distributor according to Claim 12,
**characterised in that**
the flap arrangement (8) is laterally enclosed by the housing flange (16).

## Revendications

1. Distributeur de gaz d'affinage pour acheminer du gaz d'affinage à des canaux d'admission (3) d'un moteur à combustion interne (1), en particulier d'un véhicule automobile, comprenant :
- un aménagement de clapets (8), qui présente un arbre de clapets (9) qui porte au moins un clapet (10) pour commander un tel canal d'admission (3) et est monté à rotation autour d'un axe de rotation (11) de l'arbre de clapets,
- une bride de boîtier (16) avec laquelle le distributeur de gaz d'affinage (4) peut être fixé au moteur à combustion interne (1),
- dans lequel l'aménagement de clapets (8) est agencé dans la zone de la bride de boîtier (16) dans un boîtier (5) du distributeur de gaz d'affinage (4),
- dans lequel une zone (22) de l'aménagement de clapets (8) fait saillie vers l'extérieur par-dessus la bride de boîtier (16),
- dans lequel l'arbre de clapets (9) présente une denture d'entrée (24),
- dans lequel est agencé sur un côté de l'arbre de clapets (9) tourné vers l'intérieur un arbre menant (26) qui est monté à rotation autour d'un axe de rotation (28) de l'arbre menant s'étendant parallèlement à l'axe de rotation (11) de l'arbre de clapet et qui présente une denture de sortie (27) en prise avec la denture d'entrée (24),
- dans lequel l'arbre de transmission (26) est raccordé ou peut être raccordé à une transmission de clapet (29),
- dans lequel le boîtier de distributeur (5) présente une ouverture d'entrée commune (6) pour le gaz d'affinage, une ouverture réceptrice commune (7) et, entre elles, un espace de distributeur de gaz commun (66) pour le gaz d'affinage qui est raccordé côté admission à l'ouverture d'entrée (6) et auquel se raccorde, côté échappement, l'aménagement de clapets (8) logé dans l'ouverture réceptrice (7),
**caractérisé en ce que**,
dans le boîtier de distributeur (5) est agencée une cloison de séparation (44) qui sépare un espace de transmission (65), dans lequel sont agencées la denture d'entrée (24) et la denture de sortie (27), d'un espace de distributeur de gaz (66) dans lequel le au moins un clapet (10) est agencé.

2. Distributeur de gaz d'affinage selon la revendication 1,
**caractérisé en ce que**
l'aménagement de clapets (8) est bordé latéralement par la bride de boîtier (16).

3. Moteur à combustion interne, en particulier pour un véhicule automobile, comprenant
- une tête de cylindre (2), qui présente plusieurs canaux d'admission (3) menant à des chambres de combustion (53) du moteur à combustion interne (1),
- un distributeur de gaz d'affinage (4) selon la revendication 1 ou 2 pour acheminer du gaz d'affinage aux canaux d'admission (3),
- dans lequel le distributeur de gaz d'affinage (4) est fixé à la bride de boîtier (16) sur la tête de cylindre (2),
- dans lequel la tête de cylindre (2) présente une cavité (20) dans laquelle le distributeur de gaz d'affinage (4) est logé dans la zone de l'aménagement de clapets (8),
- dans lequel la zone (22) de l'aménagement de clapets (8) logée dans la cavité (20) fait saillie par-dessus la bride de boîtier (16) dans la direction de la tête de cylindre (2),
- dans lequel l'arbre menant (26) est agencé d'un côté de l'arbre de clapets (9) opposé à la tête de cylindre (2).

4. Moteur à combustion interne selon la revendication 3,
**caractérisé en ce que**
l'arbre menant (26) traverse le boîtier de distributeur (5), est raccordé à l'arbre de clapets (9) qu'il entraîne à l'intérieur du boîtier de distributeur (5) et est raccordé ou peut être raccordé à la commande de clapet (29) qu'il entraîne à l'extérieur du boîtier de distributeur (5).

5. Moteur à combustion interne selon la revendication 3 ou 4,
**caractérisé en ce que**
l'arbre menant (26) est monté à rotation avec un palier principal (33) sur le boîtier de distributeur (5) qui supporte des forces autant radiales qu'axiales.

6. Moteur à combustion interne selon l'une quelconque des revendications 3 à 5,
**caractérisé en ce que**
la denture d'entrée (24) est formée sur une roue dentée (25) qui est raccordée solidaire en rotation à l'arbre de clapet (9) et qui est agencée sur l'arbre de clapet (9) de manière à pouvoir y effectuer un mouvement axial.

7. Moteur à combustion interne selon la revendication 6,
**caractérisé en ce que**
la roue dentée (25) a une forme convexe sur un côté frontal (40) opposé à l'arbre de clapets (9), dans lequel le côté frontal convexe (40) coopère avec une paroi (41) du boîtier de distributeur (5) tournée vers le côté frontal (40) en tant que butée axiale.

8. Moteur à combustion interne selon l'une quelconque des revendications 3 à 7,
**caractérisé en ce que**
l'aménagement de clapets (8) présente un cadre de support (12) sur lequel l'arbre de clapets (9) est monté à rotation et qui présente pour chaque clapet (10) une ouverture de sortie commandée (18) avec le clapet respectif (10).

9. Moteur à combustion interne selon la revendication 8,
**caractérisé en ce que**
la cloison de séparation (44) est formée d'un seul tenant sur le cadre de support (12).

10. Moteur à combustion interne selon la revendication 8 ou 9,
**caractérisé en ce que**
la bride de boîtier (16) présente un côté frontal (46) tourné vers la tête de cylindre (2), sur lequel le cadre de support (12) s'applique axialement par un rebord latéral (47).

11. Moteur à combustion interne selon la revendication 10,
**caractérisé en ce que**
- la bride de boîtier (16) comprend dans la direction périphérique une ouverture réceptrice (7) du boîtier de distributeur (5) tournée vers la tête de cylindre (2), dans laquelle l'aménagement de clapets (8) est logé,
- la bride de boîtier (16) présente sur un rebord latéral situé à l'intérieur un collet (45) faisant saillie dans la direction de la tête de cylindre (2) et bordant l'ouverture réceptrice (7), lequel collet présente le côté frontal (46) sur lequel le rebord (47) du cadre de support (12) s'appuie axialement.

12. Moteur à combustion interne selon l'une quelconque des revendications 3 à 11,
**caractérisé en ce que**
la bride de boîtier (16) est fixée à un rebord (21) de la tête de cylindre (2) entourant la cavité (20) dans la direction périphérique.

13. Moteur à combustion interne selon l'une quelconque des revendications 3 à 12,
**caractérisé en ce que**
la cloison de séparation (44) est en liaison avec le boîtier distributeur (4) via un assemblage par rainure et languette (59).
